# EUROPÄISCHE PATENTSCHRIFT

(11) **EP 2 286 212 B1**
(45) Veröffentlichungstag und Bekanntmachung des Hinweises auf die Patenterteilung: **19.10.2011**
(21) Anmeldenummer: 09745434.2
(22) Anmeldetag: 02.04.2009
(51) Int. Cl.: G01N 27/87

(54) **VERFAHREN ZUR ZERSTÖRUNGSFREIEN PRÜFUNG VON ROHREN**
METHOD FOR THE NONDESTRUCTIVE TESTING OF PIPES
PROCÉDÉ DE CONTRÔLE NON DESTRUCTIF DE TUBES

(30) Priorität: 15.05.2008 DE 102008024394
(43) Veröffentlichungstag der Anmeldung: 23.02.2011
(73) Patentinhaber: V & M Deutschland GmbH, 40472 Düsseldorf (DE)
(72) Erfinder: GROOS, Andreas, 47509 Rheurdt (DE); NITSCHE, Stefan, 45475 Mülheim (DE)
(74) Vertreter: Meissner, Peter E.
(86) Internationale Anmeldenummer: PCT/DE2009/000448
(87) Internationale Veröffentlichungsnummer: WO 2009/138050

(56) Entgegenhaltungen:
- EP-A- 1 847 829
- DE-A1-102004 035 174
- JP-A- 62 185 162
- US-A- 4 117 403

## Beschreibung

Die Erfindung betrifft ein Verfahren zur zerstörungsfreien Prüfung von Rohren aus ferromagnetischem Stahl mittels Streufluss gemäß dem Oberbegriff des Patentanspruches 1.

Die bekannte Streuflussprüfung wird bei Rohren aus ferromagnetischem Stahl angewendet, um in Achsrichtung gesehen längs- oder querorientierte oberflächennahe Ungänzen, wie z. B. Risse, zu detektieren, die mit anderen Prüfverfahren nicht oder nur mit großer Ungenauigkeit kosten- und zeitintensiv erfasst werden können.

Mit diesem Verfahren werden z. B. Risse erfasst, die ausgehend von der Oberfläche des Rohres sich mindestens ca. 0,3 mm erstrecken (Nondestructive Evaluation, A Tool in Design, Manufacturing, and Service, CRC Press 1997, Seiten 311-337).

Bei dem nach dem Stand der Technik bekannten Messverfahren zum Nachweis oberflächennaher Fehler an der Innen- oder Außenseite von Rohren wird die Gleichfeldmagnetisierung eingesetzt.

Im Gegensatz zur beispielsweise bei Stangenmaterial eingesetzten Wechselfeldmagnetisierung, die nur eine Detektierung von Außenfehlern zulässt, können mit der Gleichfeldmagnetisierung auch Fehler an der Innenoberfläche von Rohren detektiert werden.

Bei der Streuflussprüfung mit Gleichfeldmagnetisierung wird der Effekt genutzt, dass sich die Induktionsflussdichte im Bereich eines Fehlers erhöht, wobei die magnetischen Feldlinien durch Außen- bzw. Innenfehler in ihrer ansonsten gradlinigen Ausbreitung gestört werden, so dass ein so genannter Streufluss entsteht. Dieser an der Rohroberfläche austretende Streufluss wird zum Nachweis der Fehler genutzt.

Die Messung der magnetischen Streuflussdichte erfolgt z. B. mit Induktionsspulen, Hall-Sonden oder GMR-Sensoren, die in einem Prüfkopf angeordnet sind.

Bei der Prüfung des Rohres auf Längsfehler wird ein Magnetfeld rechtwinklig und bei der Querfehlerprüfung längs zur Rohrachse aufgebracht. Im Zuge einer kontinuierlichen und qualitätssicheren Rohrfertigung wird dann die gesamte Rohroberfläche auf Fehler untersucht.

Um die gesamte Oberfläche bei der Längsfehlerprüfung des Rohres zu erfassen, ist es notwendig, dass sich Rohr und Prüfkopf schraubenlinienförmig zueinander bewegen. Dies kann z. B. durch Transport des Rohres in Längsrichtung und gleichzeitiger Rotation unter dem stationär angeordneten Prüfkopf oder einem um das Rohr kreisförmig umlaufenden Prüfkopf bei sich nur in Rohrlängsrichtung bewegendem Rohr oder bei nur rotierendem Rohr über ein in Rohrlängsrichtung verfahrbaren Prüfkopf oder bei stillstehendem Rohr über ein schraubenlinienförmiges Verfahren des Prüfkopfes über dem Rohr erfolgen.

Bei der Querfehlerprüfung wird üblicherweise um das Rohr ein Sondenkranz fest positioniert unter dem sich das Rohr in Längsrichtung fortbewegt. Bei einer kombinierten Längs- und Querfehlerprüfung können sich aber auch die für die Längsfehlerprüfung möglichen Bewegungsabläufe ergeben.

Die verarbeiteten Signale können dann zur Sortierung und Markierung der Rohre dienen und die Prüfergebnisse protokolliert werden.

Zum Abgleich der Prüfeinrichtung wird eine auf einem Referenzwerkstück exakt senkrecht zur Prüf- bzw. Magnetfeldrichtung eingebrachte Nut als Testfehler verwendet. Sobald der Testfehler nicht mehr senkrecht zum Magnetfeld liegt, verringert sich die Signalamplitude zunehmend mit ansteigendem Winkel.

Mit der bekannten Streuflussprüfung können zwar etwaige Ungänzen an der Rohroberfläche sicher erkannt werden, eine Zuordnung der Fehlersignale zur Außen- oder Innenoberfläche des Rohres, also eine Fehlertrennung bei schräg zur Magnetfeldrichtung verlaufenen Fehlern, ist mit diesem Verfahren nicht mit ausreichender Sicherheit möglich.

Eine Fehlertrennung nach Rohraußen- oder Innenoberflächenfehlern auch bei schräg zur Magnetfeldrichtung verlaufenen Fehlern ist aus vielen Gründen wünschenswert. Fehler, die an der Außen- oder Innenoberfläche des Rohres liegen, können unterschiedliche Ursachen haben, die beispielsweise aus den vorangegangenen Fertigungsschritten (fehlerhafte Innenwerkzeuge oder Walzen) oder aus Fehlern im Vormaterial herrühren.

Weiterhin kann eine frühzeitige Fehlereingrenzung und Fehlererkennung mit entsprechenden Korrekturmaßnahmen helfen unnötig hohe Ausfall- und Nacharbeitungsquoten zu vermeiden. Bei Fehlern an der Rohrinnenoberfläche kann je nach Rohrdurchmesser gar nicht mehr nachgearbeitet werden, so dass diese Rohre auf jeden Fall aussortiert werden müssen.

Nach betrieblichen Untersuchungen reicht auch eine Frequenzanalyse der gemessenen Signale für eine genaue Fehlerzuordnung nicht aus, da die gemessenen Frequenzen eng beieinander liegen und zusätzlich von einer Art "Grundrauschen" überlagert werden. Dieses durchaus kohärente Untergrundsignal kann verschiedene Ursachen haben, wie z. B. walzbedingte Wanddickenschwankungen.

Aus diesem Grund wird gemäß WO 02/095383 A2 über eine lokale Differenzbildung der Messsignale von mindestens zwei in der gleichen Ebene liegenden Einzelsonden versucht dieses Untergrundsignal zu minimieren.

Die von Innenfehlern hervorgerufenen Amplituden und Frequenzen der Streuflüsse an der Rohraußenoberfläche sind bei vergleichbaren Fehlerabmessungen im Regelfall deutlich geringer, als diejenigen, die von Fehlern an der Rohraußenoberfläche erzeugt werden. Zur sicheren Fehlererkennung wird deshalb beim bekannten Streuflussverfahren, die Empfindlichkeit der Sonden auf mögliche Innenfehler eingestellt.

Dieses Prinzip versagt aber, sobald ein Fehler nicht mehr senkrecht zur Prüf- bzw. Magnetfeldrichtung überfahren wird und führt dazu, dass dieser Fehler wegen des dann niedrigeren Frequenzspektrums entweder nicht mehr sicher detektiert, weil z. B. das Frequenzspektrum nur unwesentlich kleiner ist als beim Außenfehler oder fälschlicherweise als Innenfehler eingestuft und gegen die empfindlichere Innenfehlerschwelle geprüft wird.

Dies hat weiterhin den Nachteil, dass noch eventuell tolerierbare Außenfehler zu empfindlich erfasst und möglicherweise als nicht mehr tolerierbarer Innenfehler angezeigt werden, und in der Folge zu unnötigem Ausschuss oder überflüssiger Nacharbeit an den Rohren führen.

Aus der JP 62185162A ist bekannt, die Winkellage oder Form eines ausgehend von einer Werkstückoberfläche sich in das Innere erstreckenden Fehlers mittels Streuflusstechnik zu detektieren. Hierbei werden allgemein Amplitudensignale von zwei senkrecht voneinander beabstandeten Sensoren erfasst, ausgewertet, zueinander in Beziehung gesetzt und aus dem Verhältnis ein Maß für die Form oder Winkellage des Fehlers abgeleitet. Die Schrift gibt jedoch keinen Hinweis darauf, wie schräg zur Prüf- bzw. Magnetfeldrichtung verlaufende Fehlersignale ausgewertet werden und wie eine Fehlertrennung von Außen- und Innenfehler erreicht werden kann.

Verfahren zur Unterscheidung von Außen- und Innenfehlern mittels Streuflussmessung sind auch aus der US 41 17 403, der DE 10 2004 035 174 A1 und der EP 1 847 829 A1 bekannt.

Aufgabe der Erfindung ist es, ein sicheres und kostengünstiges Verfahren zur zerstörungsfreien Prüfung von Rohren aus ferromagnetischem Stahl mittels Streufluss anzugeben, mit dem die Fehlererkennung auch bei schräg zur Rohrachse verlaufenden Fehlern sicherer wird und eine eindeutige Fehlerzuordnung zur Rohraußen- oder Innenoberfläche möglich ist.

Erfindungsgemäß wird diese Aufgabe dadurch gelöst, dass vor der Zuordnung der detektierten Amplitudensignale zu einem Außen- oder Innenfehler die Winkellage des Fehlers relativ zur Magnetfeldrichtung ermittelt wird und über einen zuvor ermittelten Korrekturfaktor für Amplituden und/oder Frequenzen einer senkrechten Winkellage eine Korrektur der Signale erfolgt.

Das erfindungsgemäße Verfahren beruht auf der Feststellung, dass bei bekannter Winkellage des Fehlers relativ zur Richtung des jeweiligen Magnetfeldes für die Prüfung auf Längs- oder Querfehler im Rohr über vorher ermittelte Korrekturfaktoren eine Korrektur der Amplitudenhöhe und/oder Signalfrequenz in Bezug auf eine jeweils senkrechte Winkellage (Referenzlage) vorgenommen werden kann. Hierdurch ergibt sich fallweise eine geänderte Einstufung als Außen- oder Innenfehler und damit vorteilhaft verbunden eine Verringerung des Ausschusses und der Nacharbeit vermeintlich fehlerhafter Rohre.

Je nach Prüfaufgabe kann entweder nur die Amplitudenhöhe oder die Frequenz korrigiert werden, es ist aber auch fallweise eine Korrektur beider Messgrößen möglich.

Kem der vorgeschlagenen Lösung ist die Bestimmung eines Fehlerwinkels bezogen auf die Abtastrichtung bzw. Magnetfeldrichtung.

Typischerweise wird der für die Anlageneinstellung verwendete Testfchler senkrecht zur Abtastrichtung eingebracht. Die von der Prüfsonde beim Überfahren des Fehlers gemessene Fehleramplitude und Fehlerfrequenz für jeweils Innen- und Außen-Testfehler wird zur Einstellung der Fehlerschwellen und Filter verwendet.

Sobald ein Fehler nicht mehr senkrecht zur Abtastrichtung orientiert ist, ändern sich Fehleramplitude und Fehlerfrequenz woraus sich entsprechende Korrekturwerte ermitteln lassen.

Durch das erfindungsgemäße Verfahren können dann bei bekanntem Fehlerwinkel die gemessenen Amplituden und/oder die Frequenzen mit entsprechenden Korrekturfaktoren versehen und eine korrekte Zuordnung des Fehlers vorgenommen werden.

Weiterhin verbessert das Verfahren auch den Nachweis bislang nicht oder nur schwer detektierbarer, schräg liegender Außenfehler, deren Frequenzspektrum nur unwesentlich kleiner ist als beim senkrecht liegenden Außenfehler (und die somit nicht über die niedrigere Innenfehlerschwelle nachgewiesen werden) sowie insbesondere schräg liegender Innenfehler.

Generell ist die Fähigkeit des Verfahrens hervorzuheben, auch schräg liegende Fehler mit derselben Empfindlichkeit wie senkrecht zur Magnetfeld liegende Fehler nachzuweisen.

Der Fehlerwinkel kann in einer ersten Verfahrensvariante beispielsweise durch Betrachtung der Amplituden/Zeit-Darstellungen mehrerer nebeneinander liegender Sonden, den sogenannten A-Bildern, ermittelt werden. Über jeden der Sondenkanäle wird dazu eine Schwelle, entweder eine gleitende Schwelle, die sich an den Untergrund anpasst oder eine feste Schwelle, die sich an der Anzeigenhöhe des Testfehlers orientiert, gelegt. Gegebenenfalls kann bereits vorher eine weitere Signalfilterung erfolgen, um den Grundrauschpegel abzusenken. Sobald das Messsignal einer Sonde diese Schwelle überschreitet, werden die Messsignale der benachbarten Sonden ebenfalls auf Anzeigen oberhalb der Schwelle hin untersucht.

Fallweise kann die benötigte Anzeigenhöhe in den Nachbarkanälen sogar geringer als die zur Auslösung der Bewertung genutzte Schwelle sein.

Bei Detektion langgestreckter Fehlern von mehreren benachbarten Sonden, wird sowohl die lokale maximale Amplitude als auch die Zeit zwischen den angezeigten Signalen gespeichert.

Durch eine Umrechnung/Zuordnung der Zeit auf den Ort und das anschließende Anpassen einer Ausgleichsgerade/-kurve durch die Amplitudenmaxima kann der Fehlerwinkel bzw. die Fehlerkrümmung berechnet werden.

Alternativ zur vorstehend beschriebenen Methode ist es nach einer zweiten Verfahrensvariante möglich, aus einer Darstellung in der die Fehleramplituden über die Prüflingsoberfläche aufgetragen sind (Fehler-C-Bild), z. B. durch den Einsatz von Bildverarbeitungsalogrithmen, den Fehlerwinkel zu bestimmen.

Dies ermöglicht
- Korrektur der Fehleramplitude z. B. über einen vorher vermessenen Vergleich der Amplituden von senkrecht und schräg überfahrenen Nuten und
- durch Kenntnis des Fehlerwinkels/der Fehlerkrümmung die Einstufung als Innen-oder Außenfehler, beispielsweise mittels eines gemessenen oder berechneten Korrekturfaktors, zu korrigieren.

Die Erfindung wird nachfolgend anhand der Figuren näher erläutert. Gleiche Bezugszeichen in unterschiedlichen Figuren bezeichnen gleiche Bauteile. Es zeigen:

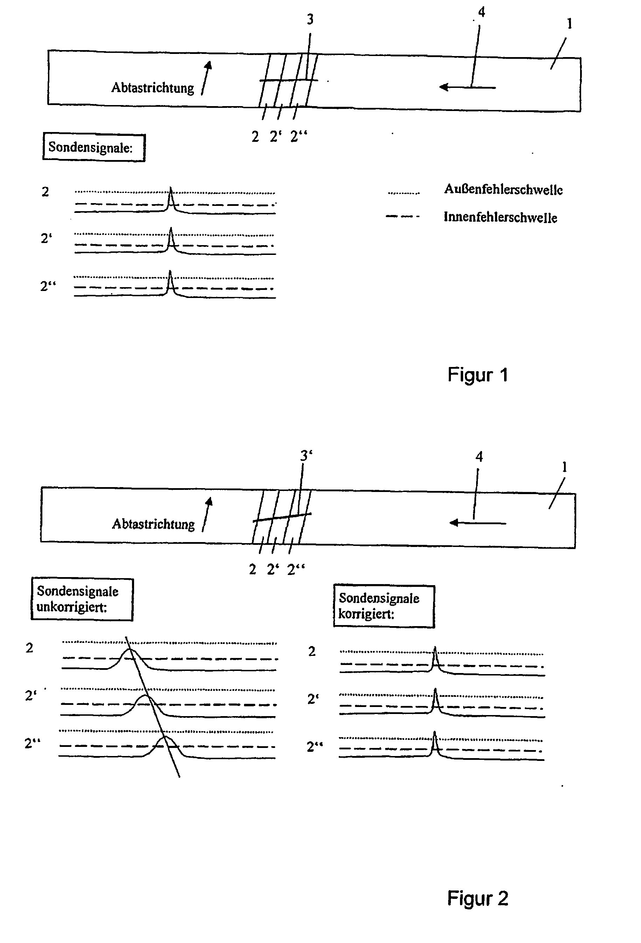

**Figur 1** eine schematisch Darstellung einer erfindungsgemäßen Verfahrensvariante mit Amplitudenkorrektur von Streuflusssignalen bei längs zur Rohrachse verlaufendem Fehler, **Figur 2** wie Figur 1, jedoch mit schräg zur Rohrachse verlaufenem Fehler
**Figur 1** zeigt schematisch im oberen Teil ein zu prüfendes Rohr 1, das einen an der Rohraußenoberfläche liegenden Fehler 3 aufweist, der längs zur Rohrachse ausgerichtet ist (Längsfehler). Die Prüfeinheit ist in diesem Fall für eine Längsfehlerprüfung ausgelegt, d. h. das Magnetfeld des hier nicht dargestellten Magnetisierungsjoches ist rechtwinklig zur Rohrachse ausgerichtet.

Die Prüfeinheit besteht aus drei Prüfsonden 2, 2', 2" eines Sondenlineals hier mit (nicht näher dargestellten) um das Rohr rotierend angeordneten Induktionsspulen, die in Achsrichtung des Rohres parallel nebeneinander liegend in einer Ebene angeordnet sind.

Für die Prüfung auf Längsfehler wird das Rohr 1 wie mit Pfeil 4 dargestellt, in Längsrichtung fortbewegt bei gleichzeitiger Drehung der Prüfeinheit um das Rohr 1, wodurch sich eine schraubenlinienförmige Abtastung der gesamten Rohroberfläche in der durch Pfeil dargestellten Abtastrichtung ergibt.

Der von der Prüfeinheit detektierte zeitliche Verlauf der Sondensignale der einzelnen Sonden 2, 2' und 2" ist im unteren Teil von **Figur 1** dargestellt.

Entsprechend des längs zur Rohrachse bzw. senkrecht zum Magnetfeld ausgerichteten Fehlers 3 an der Rohraußenoberfläche und der Abtastrichtung, wird der Fehler 3 gleichzeitig von den drei Sonden 2, 2', 2" erfasst und auf Grund des Frequenzspektrums/Amplitudenhöhe korrekt als Außenfehler, entsprechend der für die Unterscheidung von Außen- und Innenfehlern festgelegten Fehlerschwellen, angezeigt.

**Figur 2** zeigt den zeitlichen Signalverlauf der drei Prüfsonden 2, 2', 2" im Falle eines schräg zur Rohrachse bzw. zur Magnetfeldrichtung liegenden Außenfehlers 3'. Prüfaufbau und Bezugsziffern im oberen Teil von **Figur 2** entsprechen bis auf den schräg liegenden Fehler 3' **Figur 1**, so dass sich eine detaillierte Beschreibung erübrigt.

In diesem Fall erfassen die Sonden 2, 2', 2" den schräg liegenden Fehler 3', wie im unteren linken Teil von **Figur 2** dargestellt, zeitlich versetzt, wobei aufgrund der nicht mehr senkrechten Ausrichtung zum Magnetfeld der Induktionsspulen zum Fehler die Signale ein niedrigeres Frequenzspektrum und eine niedrigere Amplitudenhöhe aufweisen.

Aufgrund der festgelegten Fehlerschwellen für Außen- und Innenfehler wird der schräg liegende Außenfehler als Innenfehler klassifiziert und damit falsch zugeordnet

Mit dem erfindungsgemäßen Verfahren erfolgt nun eine Korrektur der ermittelten Signalamplituden und des Frequenzspektrums. Zunächst wird sowohl die lokale maximale Amplitude der jeweiligen Prüfsonden 2, 2', 2" als auch die Zeit zwischen den angezeigten Signalen gespeichert. Durch eine Umrechnung/Zuordnung der Zeit auf den Ort und das anschließende Anpassen einer Ausgleichsgerade/-kurve durch die Maxima kann bei Kenntnis der Relativgeschwindigkeit zwischen Rohroberfläche und Prüfeinheit ein Fehlerwinkel berechnet und anschließend die gemessenen Amplituden und Frequenzen über einen zuvor ermittelten Korrekturfaktor für Amplituden und Frequenzen einer senkrechten Winkellage korrigiert werden.

Die mit dem Korrekturfaktor korrigierten Amplituden und Frequenzen sind im unteren rechten Teil von **Figur 2** dargestellt Durch die Korrektur werden die Amplituden und Frequenzen jetzt so dargestellt, als wenn der Fehler 3' senkrecht zum Magnetfeld der Induktionsspulen erfasst worden wäre. Die korrigierten Amplituden und Frequenzen entsprechen damit den zu Figur 1 beschriebenen Signalen und ordnen den schräg verlaufenden Fehler 3' nun korrekt als Außenfehler zu, entsprechend dem dafür überschrittenen Schwellenwert.

### Bezugszeichenliste

| **Nr.** | **Bezeichnung** |
|---|---|
| 1 | Rohr |
| 2, 2' , 2" | Prüfsonde |
| 3, 3' | langgestreckter Fehler Rohraußenoberfläche |

## Patentansprüche

1. Verfahren zur zerstörungsfreien Prüfung von Rohren aus ferromagnetischem Stahl mittels Streufluss auf Fehler, bei dem das Rohr durch ein Gleichfeld magnetisiert wird und die im oberflächennahen Bereich der Außen- oder Innenoberfläche des Rohres sich befindenden Ungänzen magnetische Streuflüsse hervorrufen, die aus der Rohroberfläche austreten und durch Sonden je einer Prufeinheit für die Längs- und/oder Querfehlerprüfung detektiert werden, wobei die Zuordnung detektierter Amplitudensignale auf Basis Amplitudenhöhe und/oder Frequenzspektrum zu einem Außen- oder Innenfehler jeweils über festgelegte Fehlerschwellen vorgenommen wird
**dadurch gekennzeichnet,**
**dass** vor der Zuordnung der detektierten Amplitudensignale zu einem Außen- oder Innenfehler die Winkellage des Fehlers relativ zur jeweiligen Magnetfeldrichtung ermittelt wird und über einen zuvor ermittelten Korrekturfaktor für Amplituden und/oder Frequenzen einer senkrechten Winkellage eine Korrektur der Signale erfolgt.

2. Verfahren nach Anspruch 1
**dadurch gekennzeichnet,**
**dass** zur Ermittlung der Winkellage des Fehlers, die lokalen maximalen Amplituden von jeweils mindestens zwei in der gleichen Ebene fest voneinander beabstandet liegenden Sonden der jeweiligen Prüfeinheit, die Zeit zwischen den erfassten Amplitudensignalen und die Relativgeschwindigkeit zwischen Rohroberfläche und der Prüfeinheit erfasst und in Beziehung zueinander gesetzt werden.

3. Verfahren nach Anspruch 1
**dadurch gekennzeichnet,**
**dass** die Ermittlung der Wickellage auf Basis einer optischen Darstellung und Auswertung der Fehleramplituden über der Prüfoberfläche erfolgt.

4. Verfahren nach Anspruch 3
**dadurch gekennzeichnet.**
**dass** die Auswertung über eine automatisierte Bildverarbeitung erfolgt.

## Claims

1. A method for the non-destructive testing of pipes of ferromagnetic steel for flaws by means of stray flux, in which the pipe is magnetised by a constant field and the discontinuities located in the region close to the surface of the outer and inner surface of the pipe generate magnetic stray fluxes which issue from the pipe surface and are detected by probes of a respective testing unit for longitudinal and/or transverse flaw testing, wherein the assignment of detected amplitude signals to an outer or inner flaw on the basis of amplitude height and/or frequency spectrum is carried out in each case via set flaw thresholds, **characterised in that** before the assignment of the detected amplitude signals to an outer or inner flaw, the angular position of the flaw relative to the respective magnetic field direction is ascertained and a correction of the signals takes place via a previously ascertained correction factor for amplitudes and/or frequencies of a perpendicular angular position.

2. A method according to claim 1, **characterised in that** to ascertain the angular position of the flaw, the local maximum amplitudes of in each case at least two probes, lying in the same plane at a fixed distance from one another, of the respective testing unit, the time between the determined amplitude signals and the relative speed between the pipe surface and the testing unit are determined and placed in relation to one another.

3. A method according to claim 1, **characterised in that** ascertaining of the angular position takes place on the basis of an optical representation and evaluation of the flaw amplitudes over the test surface.

4. A method according to claim 3, **characterised in that** the evaluation takes place via automated image processing.

## Revendications

1. Procédé de contrôle non destructif de défauts sur des tubes en acier ferromagnétique au moyen d'un flux de dispersion, dans lequel le tube est magnétisé par un champ électrique équidirectionnel et les imperfections se trouvant dans la zone proche de la surface externe ou interne du tube font naître des flux de dispersion magnétiques, qui partent de la surface du tube et sont détectés par des sondes respectivement d'une unité de contrôle pour le contrôle de défauts longitudinaux et/ou transversaux, l'affectation des signaux d'amplitude détectés sur la base de la hauteur d'amplitude et/ou du spectre de fréquence à un défaut externe ou interne se faisant respectivement par le biais de seuils de défaut fixés,
**caractérisé en ce que**,
avant l'affectation des signaux d'amplitude détectés à un
défaut externe ou interne, on détermine la position angulaire du défaut par rapport à la direction respective du champ magnétique et l'on effectue une correction des signaux par le biais d'un facteur de correction déterminé auparavant pour des amplitudes et/ou des fréquences d'une position angulaire verticale.

2. Procédé selon la revendication 1,
**caractérisé en ce que**,
pour déterminer la position angulaire du défaut, les
amplitudes maximales locales de respectivement au moins deux sondes, situées à distance fixe l'une de l'autre dans le même plan, de l'unité de contrôle respective, le temps entre les signaux d'amplitude enregistrés et la vitesse relative entre la surface du tube et l'unité de contrôle sont enregistrés et sont mis en relation mutuelle.

3. Procédé selon la revendication 1,
**caractérisé en ce que**
la détermination de la position angulaire s'effectue sur
la base d'une représentation optique et d'une exploitation des amplitudes de défaut sur la surface de contrôle.

4. Procédé selon la revendication 3,
**caractérisé en ce que**
l'exploitation s'effectue par le biais d'un traitement
d'image automatisé.
